# EUROPÄISCHE PATENTSCHRIFT

(11) **EP 0 503 465 B1**
(45) Veröffentlichungstag und Bekanntmachung des Hinweises auf die Patenterteilung: **23.08.1995**
(21) Anmeldenummer: 92103722.2
(22) Anmeldetag: 05.03.1992
(51) Int. Cl.: B23D 59/00, B23Q 11/00, B27B 5/06

(54) **Plattensäge mit Absaugung**
Panel saw with suction removal
Scie à panneaux munie d'une aspiration des copeaux

(30) Priorität: 13.03.1991 DE 4108097
(43) Veröffentlichungstag der Anmeldung: 16.09.1992
(73) Patentinhaber: REICH Spezialmaschinen GmbH, 72622 Nürtingen (DE)
(72) Erfinder: Abt, Anton, W-7446 Oberboihingen (DE); Binder, Werner, W-7000 Stuttgart 80 (DE); Heydt, Fritz, Dr., W-7440 NT-Zizishausen (DE)

(56) Entgegenhaltungen:
- EP-A- 0 244 358
- FR-A- 1 194 999
- FR-A- 2 243 763
- GB-A- 2 139 556

## Beschreibung

Die Erfindung bezieht sich auf eine Plattensäge mit Absaugung gemäß Oberbegriff von Anspruch 1.

Bei vertikalen Plattensägen ist es bekannt, die beim Sägen anfallenden Sägespäne und andere Partikel über eine Haube direkt am Sägeblatt abzusaugen. Es entsteht jedoch noch zusätzlich hinter der Werkstückplatte Sägestaub, der von dieser Absaugung nicht erfasst wird und ins Freie gelangen kann (siehe zum Beispiel EP-A-0 244 358).

Dazu ist es bekannt, bei der Ausführung von horizontalen Sägeschnitten den Sägestaub zwischen den Anlageleisten für das Werkstück und am Gestell anliegenden Abdeckungen einem am Schnittende des Gestells angeordneten Absaugkanal zuzuführen. Die vordere Abdeckung ist dabei horizontal beweglich am Gestell angeordnet.

Durch die Verwendung einer zusätzlichen, das ganze Gestell übergreifenden Abdeckung ergeben sich zusätzliche Bauteile, die die Gesamtmaschine verteuern und zu Störungen führen können.

Das Werkstück wird häufig von der Seite her dem Auflagerost zugeführt, wobei bei der bekannten Ausführung die zusätzlichen Bauteile für die Abdeckung stören.

Da der vertikale Absaugkanal nur am Ende des Gestells angeordnet ist, wird die Ansaugleistung bei entfernteren Schnittstellen unbefriedigend.

Aufgabe der vorliegenden Erfindung ist daher die Schaffung einer Plattensäge mit Absaugung der eingangs genannten Art, die eine einfache und wirtschaftlich herstellbare Ausführung aufweist und bei der eine sichere Absaugung sowohl bei vertikalen als auch bei horizontalen Schnitten am Werkstück über die ganze Länge des Auflagerostes möglich ist.

Diese Aufgabe wird erfindungsgemäß durch die im kennzeichnenden Teil von Anspruch 1 angegebenen Merkmale gelöst.

Mit der erfindungsgemäßen Absaugung ist eine direkte und sichere Absaugung sowohl bei vertikalen als auch bei horizontalen Sägeschnitten möglich, ohne daß eine zusätzliche und störungsanfällige Abdeckung nötig wäre.

Das Fehlen dieser zusätzlichen Bauteile ermöglicht auch ein bequemes Einschieben der Werkstücke von der Seite.

Durch die erfindungsgemäßen Absperrorgane am unteren Ende der Strebenkanäle wird nur die Absaugung in der Nähe des Sägeblatts aktiviert, wobei eine erhebliche Erhöhung der Absaugleistung möglich ist.

Im folgenden sind Ausführungsbeispiele der Erfindung unter Bezugnahme auf die Zeichnungen näher beschrieben.

Es zeigen:
- Fig. 1: Plattensäge von vorne
- Fig. 2: Schnitt nach Linie II-II in Fig. 1
- Fig. 3: Schnitt nach Linie III-III in Fig. 1
- Fig. 4: Schnitt nach Linie IV-IV in Fig. 1
- Fig. 5: Schnitt nach Linie V-V in Fig. 1 eines zweiten Ausführungsbeispiels
- Fig. 6: Vorderansicht einer Umlenkklappe
- Fig. 7: Endkanal von oben eines weiteren Ausführungsbeispiels.

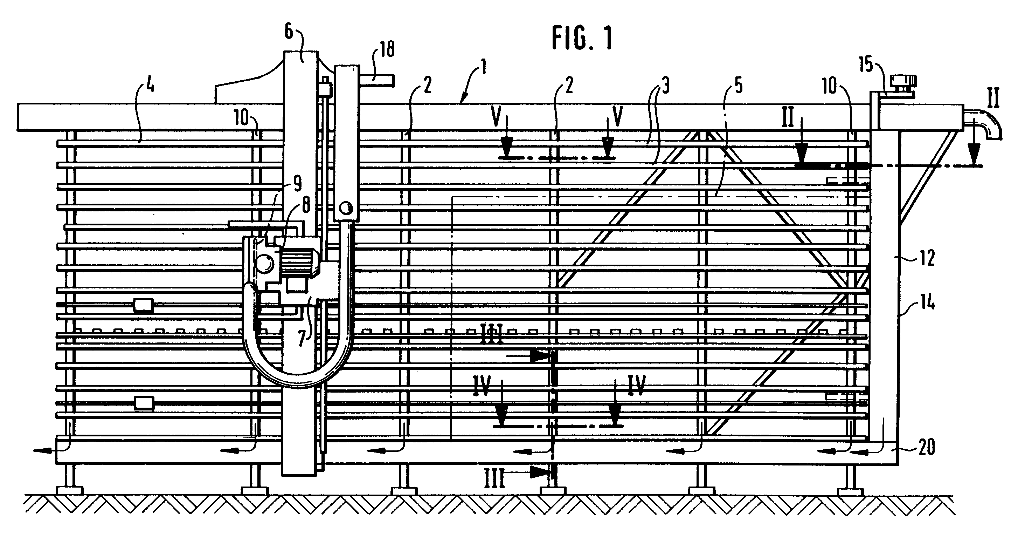

Fig. 1 zeigt eine gesamte Plattensäge mit einem Gestell 1, bei dem an vertikalen Streben 2 horizontale Anlageleisten 3 beffestigt sind. Diese bilden die Anlagefläche 4 für das Werkstück 5, das durch vertikale bzw horizontale Schnitte zertrennt werden soll.

Dazu ist an einem Sägebalken 6, der am Gestell 1 horizontal verschiebbar gelagert ist, ein vertikal verschiebbarer Sägeschlitten 7 angeordnet, an dem die in eine vertikale und horizontale Stellung schwenkbare Kreissäge 8 mit einem Sägeblatt 9 befestigt ist.

Zur Ausführung von vertikalen Sägeschnitten wird der Sägebalken 6 an bestimmten vertikalen Schnittstellen verriegelt, die mit den vertikalen Streben 2 zusammenfallen.

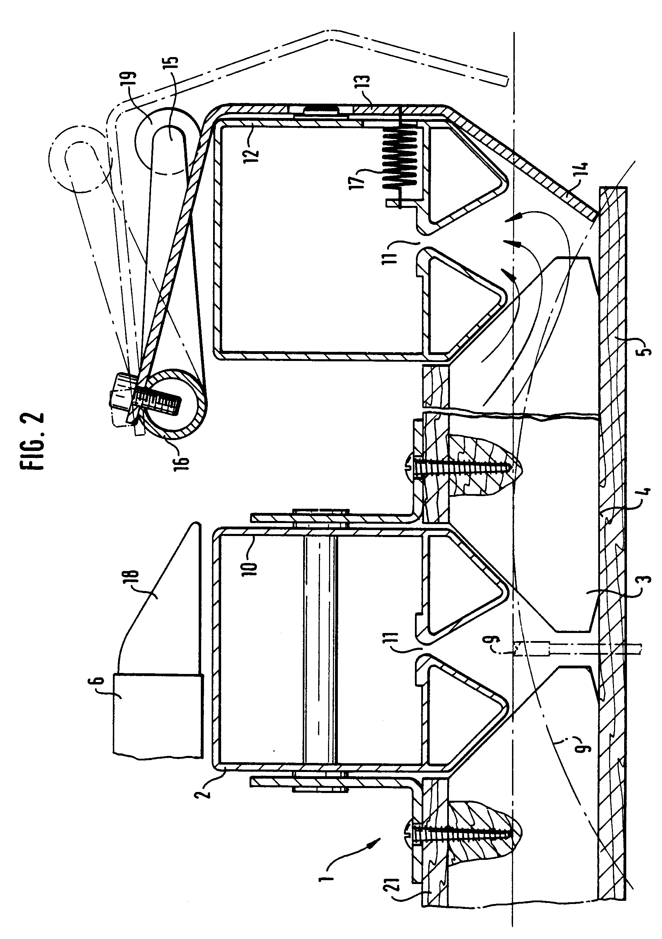

Wie auch Fig. 2 zeigt, sind diese vertikalen Streben 2 als Hohlprofile ausgebildet, die so einen Strebenkanal 10 bilden, der einen in Richtung Auflagenleisten 3, also nach vorne offenen, trichterförmigen Absaugschlitz 11 aufweist.

Am Schnittende der Plattensäge, also in Fig. 1 am rechten Ende, befindet sich ein vertikaler Endkanal 12 mit einem Absaugschlitz 11, der durch eine dazu parallele, gegen die Auflagefläche 4 geneigten Umlenkplatte 13 teilweise überdeckt wird.

Wie Fig. 2 zeigt, legt sich die Umlenkplatte 13 mit ihrem freien Ende 14 gegen die Rückseite von Werkstück 5 und ist mit ihrem anderen Ende an einem Steuerhebel 15 befestigt, der an einem am Gestell 1 befestigten Zapfen 16 schwenkbar gelagert ist. In Ruhestellung zieht eine Feder 17 die Umlenkplatte 13 an dem Endkanal 12.

Beim Horizontalschnitt würde das Sägeblatt 9 an seinem Schnittende die Umlenkplatte 13 beschädigen. Mit dem Sägebalken 6 ist daher ein keilförmiger Steuernocken 18 verbunden, der bei Annäherung des Sägeblatts 9 an die Umlenkplatte 13 mit einer Rolle 19 und Hebel 15 zusammenwirkt und so die Umlenkplatte 13 im Gegenuhrzeigersinn aus der Bahn von Sägeblatt 9 herausschwenkt.

Sowohl die Strebenkanäle 10, als auch der Endkanal 12 sind an ihrem unteren Ende mit einem am Gestell 1 befestigten Sammelkanal 20 verbunden, von dem der anfallende Sägestaub durch ein nicht dargestelltes Absauggebläse abgesaugt wird.

Das Gestell 1 ist über seine gesamte hintere Fläche mit Abdeckplatten 21 abgedeckt (Fig. 2).

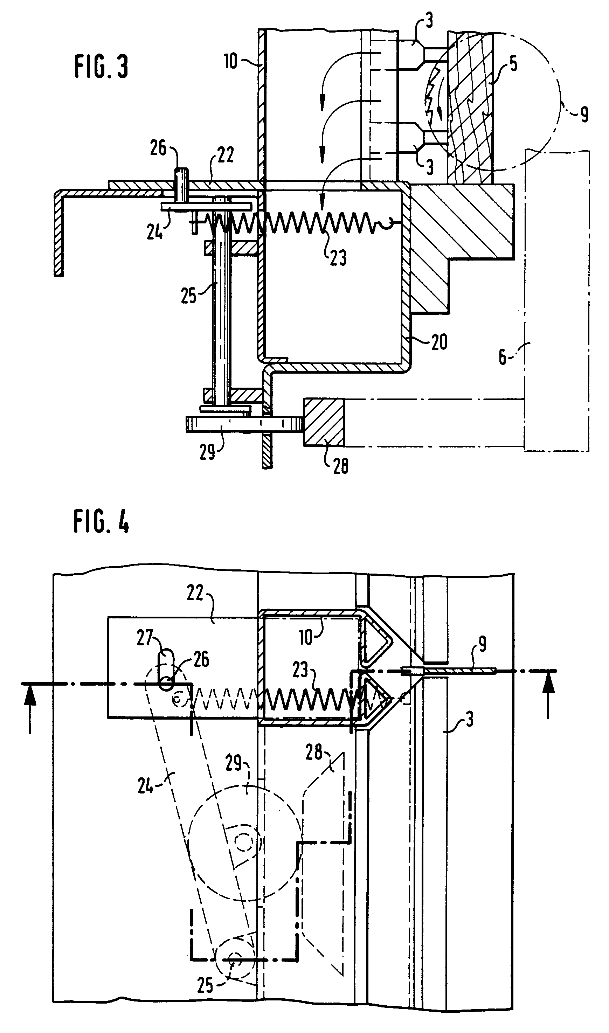

Wie Fig. 3 und 4 zeigen, sind am unteren Ende der Strebenkanäle 10 Absperrorgane 22 angeordnet, die in Form von verschiebbaren Platten die Strebenkanäle 10 vom Sammelkanal 20 absperren.

In Ruhestellung werden sie von einer Feder 23 in Richtung Auflageleiste 3 gezogen und zu ihrer Bestätigung dient ein Steuerhebel 24 der an einer Achse 25 von Gestell 1 schwenkbar gelagert ist und mit einem weiteren Zapfen 26 in einen Längsschlitz 27 von Absperrorgan 22 eingreift.

Der Sägebalken 6 ist mit einem Steuernocken 28 versehen, der mit einer am Hebel 24 frei drehbar gelagerten Rolle 29 zusammenwirkt.

Die Strebenkanäle 10 sind somit in Ruhestellung gegen den Sammelkanal 20 geschlossen, werden jedoch beim vertikalen Schnitt längs eines Strebenkanals 10 bzw beim horizontalen Schnitt bei der Annäherung des Sägeblatts 9 an den Strebenkanal 10 geöffnet. Dabei wird der jeweils in Vorschubrichtung nächste Strebenkanal 10 so lange geöffnet, bis ihn das Sägeblatt erreicht hat. Er wird dann geschlossen und der nächste Strebenkanal 10 wird geöffnet.

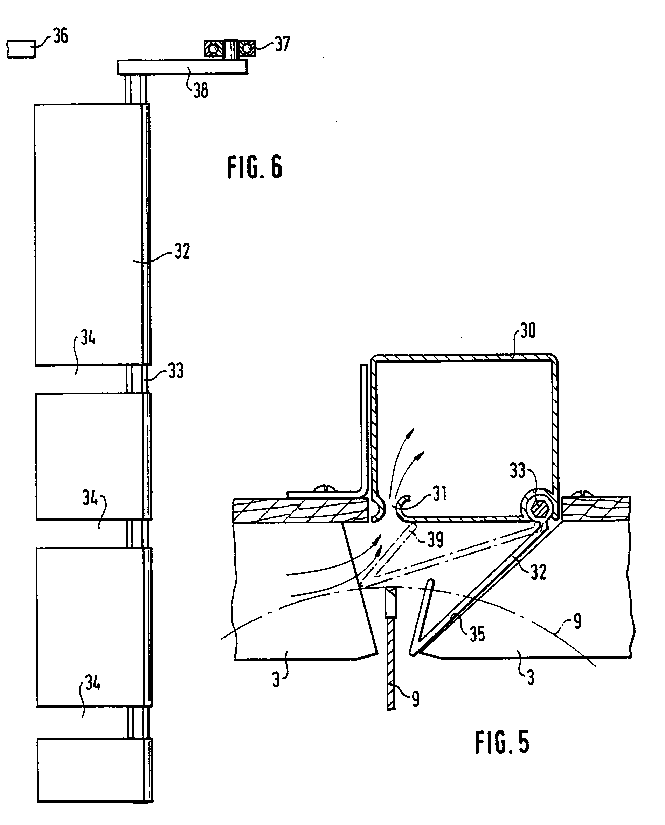

Bei einem weiteren, in Fig. 5 und 6 gezeigten Ausführungsbeispiel sind an den Strebenkanälen 30 parallel zum Absaugschlitz 31 vertikale, vom Sägebalken 6 betätigbare Umlenkelemente 32 in Form von schwenkbaren Umlenkklappen angeordnet. Sie sind mit einer vertikalen Sechskantwelle 33 verbunden und weisen Unterbrechungen 34 auf, in denen horizontale Bauteile der Plattensäge, z.B. Längsanschlag oder Klappschiene, angeordnet sind.

Fig. 5 zeigt die Stellung der Umlenkklappe 32 ausgezogen beim Vertikalschnitt. Sie wird dabei von einer nicht dargestellten Torsionsfeder in den Ausschnitten der Anlageleisten 3 gegen deren Stirnseite 35 gedrückt.

Beim Horizontalschnitt würde das strichpunktiert dargestellte Sägeblatt 9 die Umlenkklappe 32 beschädigen, diese wird daher, wie in Fig. 6 dargestellt, durch einen mit dem Sägebalken 6 verbundenen Steuernocken 36 und einen mit einer Rolle 37 versehenen Steuerhebel 38 in die in Fig. 5 strichpunktiert gezeichnete Stellung verschwenkt. Dabei befindet sich die Umlenkklappe 32 außerhalb des Flugkreises von Sägeblatt 9, der anfallende Sägestaub wird durch einen geneigten Schenkel 39 von Umlenkplatte 32 in den Absaugschlitz 31 gelenkt.

Nach Überfahren der Umlenkplatte 32 durch das Sägeblatt 9 geht diese sofort wieder in ihre ausgezogen gezeichnete Ausgangsstellung zurück.

In dieser Stellung wird der Sägestaub bei Vertikalschnitten im gesamten Bereich der Auflagefläche 4 zuverlässig abgesaugt.

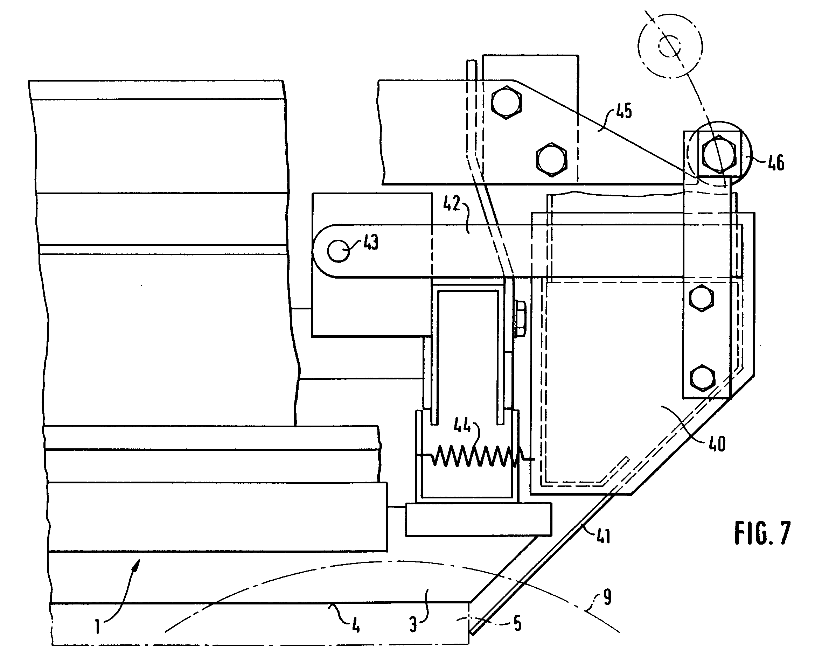

Fig.7 zeigt ein weiteres Ausführungsbeispiel der Erfindung, wobei der Endkanal 40 mit der mit ihm verbundenen Umlenkplatte 41 schwenkbar am Gestell 1 gelagert ist. Dazu sind mit dem Endkanal 40 Lagerarme 42 verbunden, die an Achsen 43 von Gestell 1 schwenkbar gelagert sind. Endkanal 40 wird durch eine Feder 44 in Richtung Gestell 1 gezogen.

Zum Verschwenken von Endkanal 40 dient ein am Sägebalken 6 befestigter Steuernocken 45, der mit einer mit dem Endkanal 40 verbundenen Rolle 46 zusammenwirkt. Bei der Annäherung von Sägeblatt 9 beim Horizontalschnitt wird somit die Umlenkplatte 41 aus dem Wirkungsbereich des Sägeblatts 9 herausgeschwenkt.

## Patentansprüche

1. Plattensäge mit Absaugung mit einem aufrechten, an seiner Rückseite geschlossenen Gestell (1) mit vertikalen Streben (2) und damit verbundenen horizontalen Anlageleisten (3), mit einem am Gestell (1) horizontal verschiebbar gelagerten Sägebalken (6), an dem ein Sägeschlitten (7) mit einer verschwenkbaren Kreissäge (8) vertikal verschiebbar gelagert ist und mit einem am Gestell (1) angeordneten, vertikalen Absaugkanal, **gekennzeichnet** durch vertikale Strebenkanäle (10) mit nach vorne offenen Absaugschlitzen (11), die den vertikalen Schnittstellen (2) zugeordnet sind, durch einen am Schnittende des Gestells angeordneten, vertikalen Endkanal (12) mit einem Absaugschlitz (11) und mit einer dazu parallel gegen die Auflagefläche (4) geneigten und vom Sägebalken (6) betätigbaren Umlenkplatte (13).

2. Plattensäge nach Anspruch 1, **dadurch gekennzeichnet**, daß die vertikalen Streben (2) als Strebenkanäle (10) ausgebildet sind.

3. Plattensäge nach Anspruch 1 oder 2, **dadurch gekennzeichnet**, daß die am Schnittende angeordnete Umlenkplatte (13) schwenkbar am Gestell (1) gelagert ist.

4. Plattensäge nach einem der Ansprüche 1 bis 3, **dadurch gekennzeichnet**, daß die Strebenkanäle (10) an ihrem unteren Ende Absperrorgane (22) aufweisen, die vom Sägebalken (6) betätigbar sind.

5. Plattensäge nach einem der Ansprüche 1 bis 4, **dadurch gekennzeichnet,** daß an den Strebenkanälen (30) parallel zum Absaugschlitz (31) vertikale, vom Sägebalken (6) betätigbare Umlenkelemente (32) angeordnet sind.

6. Plattensäge nach Anspruch 5, **dadurch gekennzeichnet,** daß die Umlenkelemente (32) als schwenkbare Umlenkklappen ausgebildet sind.

7. Plattensäge nach Anspruch 5 oder 6, **dadurch gekennzeichnet**, daß die Umlenkelemente (32) Unterbrechungen (34) aufweisen.

8. Plattensäge nach einem der Ansprüche 1 bis 7, **dadurch gekennzeichnet,** daß der Endkanal (40) mit der mit ihm verbundenen Umlenkplatte (41) schwenkbar am Gestell (1) gelagert ist.

## Claims

1. A panel saw with an extractor having an upright frame (1) closed at its rear with vertical struts (2) and horizontal rails (3) connected thereto, having a sawing bar (6) mounted for horizontal movement on said frame and on which is mounted a sawing slide (7) with a swivellable circular saw (8) for vertical movement, and having a vertical extraction duct disposed on said frame (1), **characterized** by vertical strut ducts (10) with extraction slots (11) open to the front and associated with the cutting points (2), by a vertical end channel (12) disposed at the cutting end of said frame and having an extraction slot (11) and a diverting plate (13) inclined parallel thereto in relation to the contact surface (4) and actuatable by said sawing bar (6).

2. A panel saw according to Claim 1, **characterized** in that said vertical structs (2) are designed as strut ducts (10).

3. A panel saw according to Claim 1 or 2, **characterized** in that said diverting plate (13) disposed at the cutting end is mounted swivellably on said frame (1).

4. A panel saw according to one of Claims 1 to 3, **characterized** in that said strut ducts (10) have at their lower ends cut-off elements (22) actuatable by said sawing bar (6).

5. A panel saw according to one of Claims 1 to 4, **characterized** in that vertical diverting elements (32) actuatable by said sawing bar (6) and parallel to the extraction slot (31) are disposed on the strut ducts (30).

6. A panel saw according to Claim 5, **characterized** in that said diverting elements (32) are designed as swivellable diverting flaps.

7. A panel saw according to Claims 5 or 6, **characterized** in that said diverting elements (32) have interruptions (34).

8. A panel saw according to one of Claims 1 to 3, **characterized** in that the end duct (40) with the diverting plate (41) connected thereto is swivellably mounted on said frame (1).

## Revendications

1. Scie à panneaux avec aspiration avec un bâti (1) fermé à l'arrière avec des montants (2) verticaux et des baguettes d'appui (3) horizontales y conjuguées, avec une barre de sciage (6) logée de façon déplaçable horizontalement sur le bâti (1), un traînard (7) avec une scie circulaire (8) pivotable et déplaçable verticalement y étant logée et avec un canal d'aspiration vertical disposé sur le bâti (1),
**caractérisée** par des montants verticaux creux (10) avec des fentes d'aspiration (11) ouvertes à l'avant conjuguées aux points de coupe (2) verticaux, par un canal de bout (12) vertical disposé sur l'extrémité de coupe du bâti avec une fente d'aspiration (11) et avec une plaque de déviation (13) parallèle à ce canal, inclinée vers la surface d'appui (4) et actionnable par la barre de sciage (6).

2. Scie à panneaux selon la revendication 1,
**caractérisée en ce que** les montants verticaux (2) sont conçus comme montants creux (10).

3. Scie à panneaux selon la revendication 1 ou 2,
**caractérisée en ce que** la plaque de déviation (13) disposée sur l'extrémité de coupe est logée de façon pivotable sur le bâti (1).

4. Scie à panneaux selon l'une des revendications 1 à 3,
**caractérisée en ce que** les montants creux (10) présentent à leur extrémité inférieure des organes d'obturation (22) actionnables par la barre de sciage (6).

5. Scie à panneaux selon l'une des revendications 1 à 4,
**caractérisée en ce que** des éléments de deviation (32) sont disposés sur les montants creux (30) verticaux en parallèle à la fente d'aspiration (31), actionnables par la barre de sciage (6).

6. Scie à panneaux selon la revendication 5,
**caractérisée en ce que** les éléments de déviations (32) sont conçus somme clapets déflecteurs pivotables.

7. Scie à panneaux selon la revendication 5 ou 6,
**caractérisée en ce que** les éléments de déviation (32) présentent des interruptions (34).

8. Scie à panneaux selon l'une des revendications 1 à 7,
**caractérisée en ce que** le canal de bout (40) est logé de façon pivotable sur le bâti (1) avec la plaque de déviation (41) conjuguée.
